# EUROPÄISCHE PATENTSCHRIFT

(11) **EP 1 341 417 B1**
(45) Veröffentlichungstag und Bekanntmachung des Hinweises auf die Patenterteilung: **31.05.2006**
(21) Anmeldenummer: 01989548.1
(22) Anmeldetag: 30.11.2001
(51) Int. Cl.: A22C 11/12

(54) **VERSCHLIESSVORRICHTUNG FÜR SCHLAUCHFÖRMIGE VERPACKUNGEN**
CLOSING DEVICE FOR FLEXIBLE TUBULAR PACKAGING
DISPOSITIF DE FERMETURE POUR EMBALLAGES TUBULAIRES

(30) Priorität: 06.12.2000 DE 10060497
(43) Veröffentlichungstag der Anmeldung: 10.09.2003
(73) Patentinhaber: Poly-clip System GmbH & Co. KG, 60489 Frankfurt am Main (DE)
(72) Erfinder: TÖPFER, Klaus, 46572 Büttelbirn (DE)
(74) Vertreter: Eisenführ, Günther
(86) Internationale Anmeldenummer: PCT/EP2001/014025
(87) Internationale Veröffentlichungsnummer: WO 2002/045517

(56) Entgegenhaltungen:
- DE-A- 19 953 694
- DE-B- 1 123 588
- US-A- 5 405 288
- US-A- 5 918 447

## Beschreibung

Die Erfindung betrifft eine Vorrichtung zum Verschließen schlauchförmiger Verpackungen wie Wursthüllen o.ä., mit gegeneinander schwenkbar an einem gemeinsamen Träger angelenkten, plattenförmigen Einschnürelementen zum Einschnüren des Verpackungsschlauches und einem von einer Kraftquelle angetriebenen Stempel sowie einer mit diesem zusammenwirkenden Matrize zum Verschließen einer Verschlussklammer um den durch Einschnüren gebildeten Zopf aus dem Verpakkungsschlauch, wobei in den Einschnürelementen sowohl eine Führung für den Stempel vorgesehen als auch die Matrize angeordnet ist.

Eine derartige Verschließvorrichtung ist aus der DE-PS 2 009 541 und US-A-5 405 288 bekannt. Am Kolben eines Pneumatikzylinders sind sowohl der Stempel als auch eine doppelt wirkende Kurvenscheibe zum Verschwenken der beiden als Einschnürelemente dienenden Raffarme befestigt. Wird der Pneumatikzylinder betätigt, verschwenkt die Kurvenscheibe zunächst die Raffarme, welche dabei einen (zunächst im Querschnitt länglichen) Zopf des Verpackungsschlauches bilden. Zugleich verlängern entsprechend ausgebildete Abschnitte der Raffarme die im Träger vorgesehene Führung für den Stempel, so dass diese im Schließzustand der Raffarme bis zu der in einem der Raffarme angeordneten Matrize reicht und der Stempel beim weiteren Arbeitshub des Pneumatikzylinders die von ihm um den Zopf des Verpackungsschlauchs geführte Verschlussklammer mit Hilfe der Matrize verschließen kann.

Derartige Verschließvorrichtungen werden insbesondere an Maschinen zum Füllen großkalibriger Einzelwürste eingesetzt. Sie werden vor dem Ende des Füllrohres angeordnet, wobei das jeweilige Füllrohr Teil eines Mehrfach-Füllkopfes sein kann, so dass während des Füllens einer Wurst die schlauchförmige Hülle für die nächste zu füllende Wurst auf ein anderes gleichartiges Füllrohr aufgezogen werden kann. Obgleich die Verarbeitungsgeschwindigkeit solcher Füllvorgänge nicht annähernd an die moderner Füll-, Abteil- und Verschließmaschinen zur Herstellung von Strängen aufeinanderfolgender Würste heranreicht, spielt doch auch dabei der Zeitfaktor und die mechanische Belastung des Verpackungsschlauches eine nicht unerhebliche Rolle. Hinzu kommt das Bestreben, den apparativen und betrieblichen Aufwand, insbesondere auch den Verschleiß der Verschließvorrichtung so gering wie möglich zu halten.

Der Erfindung liegt daher, ausgehend von der vorstehend beschriebenen bekannten Verschließvorrichtung, die Aufgabe zugrunde, eine sowohl hinsichtlich des konstruktiven Aufwandes, aber vor allem auch hinsichtlich der Kosten und der Zuverlässigkeit im Betrieb günstigere Ausbildung bereitzustellen.

Erfindungsgemäß wird diese Aufgabe dadurch gelöst, dass die Kraftquelle an einem der Einschnürelemente befestigt und mit diesem verschwenkbar ist, und dass der Stempel über seinen gesamten Vorschubweg in diesem Einschnürelement geführt ist. Der eigentliche Verschließvorgang ist vom voraufgehenden Einschnüren des Verpackungsschlauches unabhängig. Letzteres erfolgt vorzugsweise durch eine irisartig ausgebildete Einschnüreinrichtung, wie sie Gegenstand der DE-PS 199 34 154.0 ist. Auf Grund der Befestigung der Kraftquelle für den Verschließstempel an einem Einschnürelement wird diese - auch hier bietet sich ein Pneumatikzylinder an - beim Verschwenken des Einschnürelements mitgenommen und dadurch zugleich an den Zopf und die mit einem anderen Einschnürelement angeschwenkte Matrize herangeführt, so dass es nur noch eines relativ kurzen Hubes des Pneumatikzylinders bedarf, um die (üblicherweise U-förmige) Verschlussklammer um den Zopf zu führen und mit Hilfe der Matrize um diesen herum zu verschließen.

Der kurze Vorschubweg bedeutet nicht nur entsprechend geringen Verschleiß, sondern vor allem auch verringerten Verbrauch an Treibmittel für die Stempel-Verschließbewegung. Der Vorteil eines kurzhubigen Verschließzylinders insbesondere in Verbindung mit einem feststehenden, beim Verschwenken des Zylinders mit dem Stempel und seiner Führung nicht mitgeschwenkten Verschlussklammer-Magazins ist aus der älteren Patentanmeldung 199 53 694.5 bekannt, jedoch ist dort die Stempeleinrichtung nicht in die Einschnüreinheit integriert.

Vorteilhaft ist die Anordnung mit einer Einschnüreinheit aus drei, jeweils an einem Ende auf einem zur Achse des Verpackungsschlauches konzentrischen Kreis um 120° versetzt gelagerten Einschnürelementen derart getroffen, dass eines der Einschnürelemente aus einer Platte besteht und die Matrize trägt, eines aus zwei planparallelen Blechen mit einem die Dicke der Platte etwas übersteigenden Abstand besteht und das dritte der Einschnürelemente teils aus einer Platte, teils aus zwei planparallelen Blechen jener Ausbildung besteht, wobei die Teilung in der Mitte zwischen den beiden Enden dieses Einschnürelements und (im Öffnungszustand) radial zum Lagerkreis verläuft. Auf diese Weise stehen sowohl der Matrize als auch der Stempelführung stabile Träger zur Verfügung, die sich aber beim Einschnüren mit ihren dann nicht mehr exponierten Abschnitten zwischen die Bleche der jeweils anderen Einschnürelemente schieben können und auf diese Weise eine geringe Baudicke des Gesamtaggregats erzielen.

Weitere vorteilhafte Ausgestaltungen der Erfindung ergeben sich aus der nachfolgenden Beschreibung eines Ausführungsbeispiels an Hand der Zeichnungen. Darin zeigt:
- Fig. 1: eine Frontansicht einer Einschnür- und Verschließvorrichtung im (geöffneten) Ruhezustand;
- Fig. 2: eine Ansicht in Richtung der Linie A-A in Fig. 1;
- Fig. 3: eine Ansicht in Richtung der Linie B-B in Fig. 1;
- Fig. 4: eine Ansicht in Richtung der Linie C-C in Fig. 1;
- Fig. 5: eine der Fig. 1 entsprechende Ansicht nach Überführung einer Verschlussklammer aus dem Klammermagazin in eine Bereitschaftsstellung;
- Fig. 6,: eine gleichartige Frontansicht nach Schließen der Einschnürelemente; und
- Fig. 7: eine weitere gleichartige Darstellung nach dem Verschließen der bereitgehaltenen Verschlussklammer.

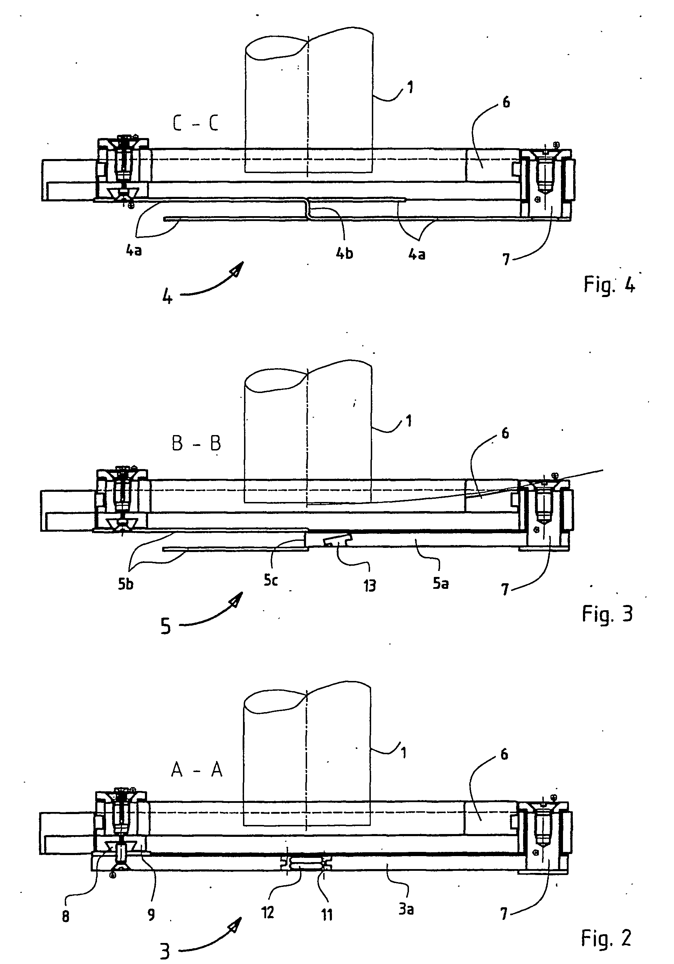

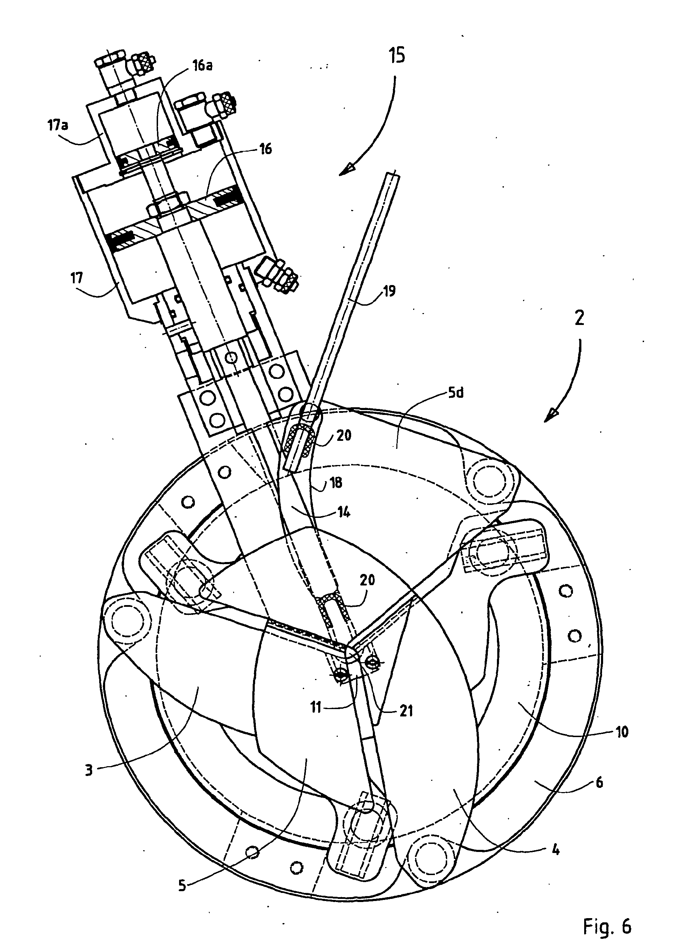

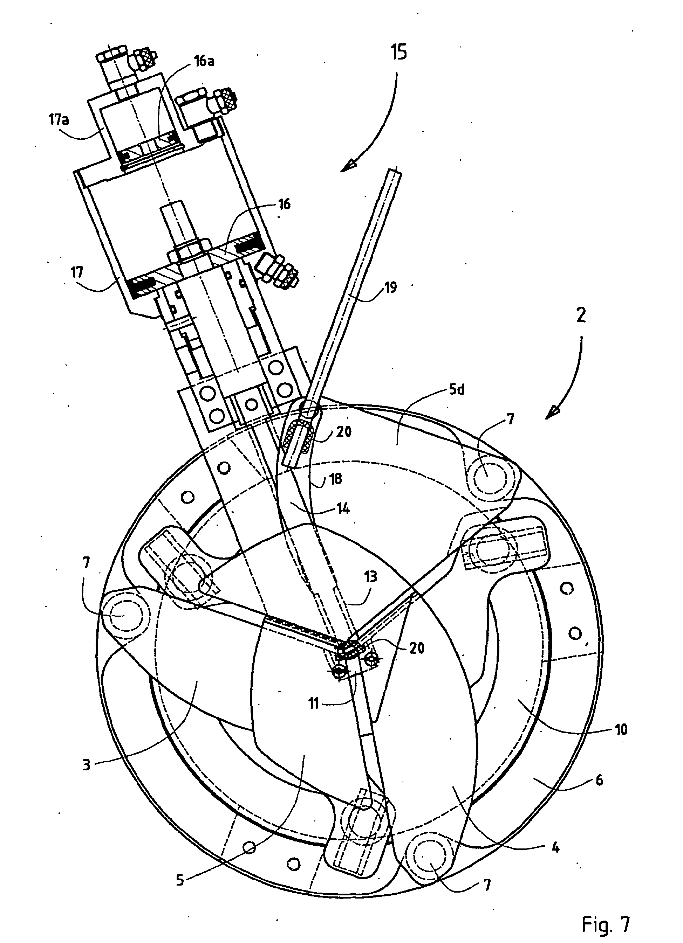

Konzentrisch zur Mündung eines nur angedeuteten Füllrohres 1 (in den Fig. 2 - 4 hinzugefügt) ist die im Ganzen mit 2 bezeichnete Einschnüreinheit der erfindungsgemäßen Verschließvorrichtung angeordnet. Sie besteht im wesentlichen aus drei plattenförmigen Einschnürelementen 3, 4 und 5, die auf einem ortsfesten Trägerring 6 auf Zapfen 7 - jeweils um 120° gegeneinander versetzt - mit einem ihrer Enden schwenkbar gelagert sind. Die anderen Enden der Einschnürelemente 3, 4 und 5 sind jeweils mittels Kulissensteinen 8 in Kulissen 9 an einem konzentrisch innen liegenden Ring 10 derart gelagert, dass dessen Verdrehung zum Einschwenken der Einschnürarme und damit deren Schließen führt, so dass ein in der Öffnung befindlicher Verpackungsschlauch zu einem Zopf gerafft wird (Fig. 6 und 7). Ergänzend wird auf die DE-PS 1 99 34 1 54 Bezug genommen.

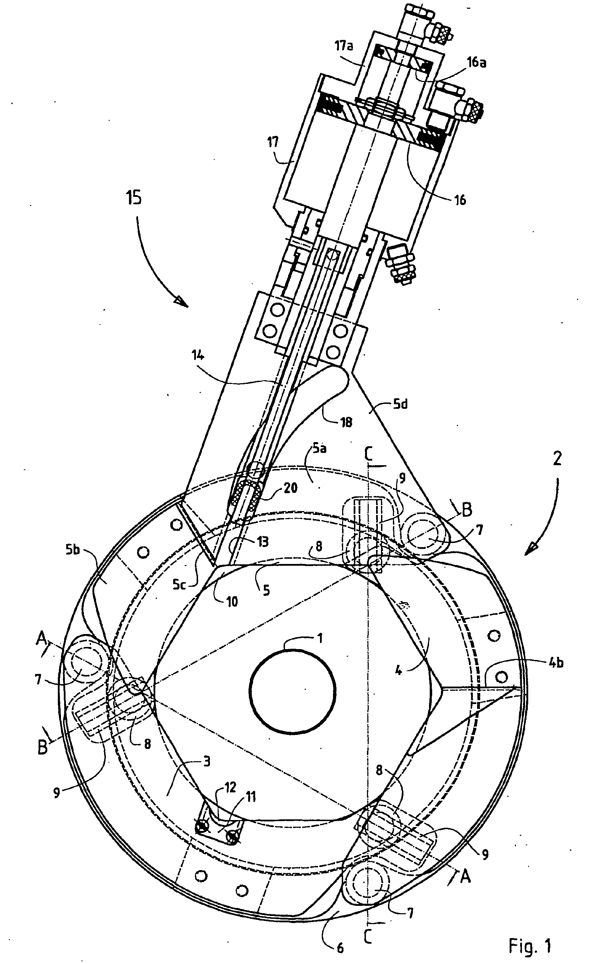

Die Wirkflächen aller Einschnürelemente 3, 4 und 5 haben mittig zwischen ihren Enden eine (ausgerundete) Abknickung von 120°, so dass im geöffneten Zustand der Einschnüreinheit die umschriebene Öffnung die Form eines gleichschenkligen Hexagon hat. Das Einschnürelement 3 besteht aus einer durchgehenden Platte 3a, die in ihrem Knickbereich die Matrize 11 mit zwei parallelen Rillen 12 für die aus Draht bestehende U-förmige Verschlussklammer 20 aufnimmt (Fig. 2). Das Einschnürelement 5 besteht hälftig ebenfalls aus einer der Platte 3a entsprechenden Platte 5a und zur anderen Hälfte aus zwei planparallelen Blechen 5b, wobei die Teilungsfuge 5c in dem in Fig. 1 gezeigten Öffnungszustand radial verläuft (Fig. 3). Das Einschnürelement 4 besteht insgesamt aus planparallelen Blechen 4a in der Fig. 4 entnehmbaren Konfiguration mit einer der Teilungsfuge 5c entsprechenden Querwand 4b. Der Abstand der Bleche 4a bzw. 5b übersteigt etwas die Dicke der Plattenabschnitte 3a bzw. 5a, so dass beim Verschwenken der Einschnürelemente und Schließen der Einschnüreinheit letztere zwischen ersteren Platz finden (Fig. 6, 7).

Im Plattenabschnitt 5a des Einschnürelements 5 ist die Führung 13 für den Stempel 14 der im Ganzen mit 15 bezeichneten eigentlichen Verschließeinrichtung vorgesehen (Fig. 3, 1). Die Stempelführung 13 ist, wie Fig. 3 deutlich macht, etwas verschwenkt, so dass beim Verschließvorgang der eine Schenkel der U-förmigen Verschlussklammer 20 in die eine und der andere Schenkel in die andere Rille 12 der Matrize 11 gelangt, wodurch sich ein spiralförmiger Verschlusszustand der Klammer ergibt.

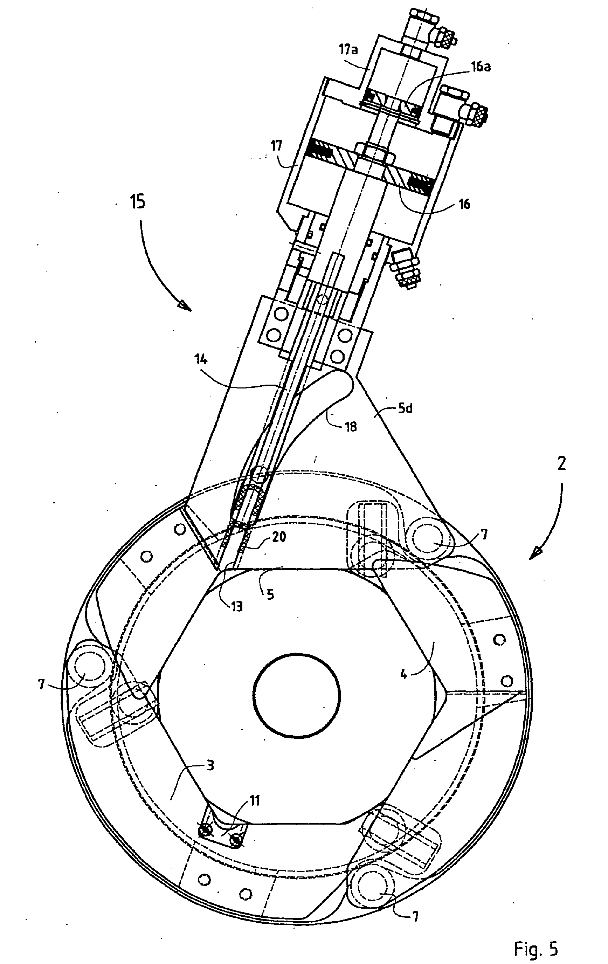

Der Stempel 14 ist am Kolben 16 eines Pneumatikzylinders 17 befestigt, welcher seinerseits an einem Ansatz 5d des Einschnürelements 5 befestigt ist. Der Pneumatikzylinder 17 ist als Stufenzylinder mit einem Zylinderabschnitt 17a kleineren Durchmessers ausgebildet, dessen Kolben 16a Wirkverbindung zum Kolben 16 besitzt. Durch einen Ausschnitt 18 im Ansatz 5d erstreckt sich ein ortsfest - beispielsweise am Trägerring 6 - gehaltenes Magazin 19 für den Vorrat an Verschlussklammern 20. Es ist in den Fig. 1 und 5 nicht, wohl aber in den Fig. 6 und 7 sichtbar, weil dort das mit dem Pneumatikzylinder 17 verschwenkte Einschnürelement 5 den Blick insoweit freigibt.

In der in Fig. 1 dargestellten Ausgangsstellung steht das Magazin 19 mit den darauf befindlichen Verschlussklammern 20 über eine (nicht dargestellte) Einlassöffnung der Stempelführung 13 mit dieser in Verbindung, so dass eine Verschlussklammer 20 in den von der Führung gebildeten Klammervorschub-Kanal eintreten kann. Durch Beaufschlagung zunächst nur des Kolbens 1 6a im Zylinderabschnitt 17a wird der Stempel 14 vorgeschoben und führt die Klammer 20 in ihre in Fig. 5 dargestellte Bereitschaftsstellung innerhalb der Stempelführung 13. Hierauf werden durch Verdrehen der Ringe 6 und 10 gegeneinander die Einschnürelemente 3, 4 und 5 unter Verschwenken um ihre Schwenkzapfen 7 in die in Fig. 6 gezeigte geschlossene Einschnürstellung gebracht; in der sich dabei ergebenden, etwa dreieckigen Restöffnung 21 (Fig. 6) befindet sich dann der (hier nicht dargestellte) Zopf der schlauchförmigen Verpackungshülle. Wie Fig. 6 deutlich macht, wurde bei diesem Einschnürvorgang zugleich einerseits die im Einschnürelement 3 vorgesehene Matrize 11, andererseits die im Einschnürelement 5 bereitgehaltene Verschlussklammer 20 an die Öffnung 21 herangeführt; der Ausschnitt 18 im Ansatz 5d des Einschnürelements 5 hat dabei eine Behinderung des Schwenkvorganges durch das Magazin 19 mit den darauf befindlichen Verschlussklammern 20 verhindert. Schließlich wird durch Beaufschlagung des Kolbens 16 die Verschlussklammer um den in der Öffnung 21 befindlichen Zopf des Verpackungsschlauches herum in die Rillen 12 der Matrize 11 geführt und die Verschlussklammer 20 durch Verbiegen ihrer Schenkel in üblicher Weise verschlossen. Alsdann fährt der Stempel 14 in seine Ausgangsstellung zurück und die Einschnürelemente 3, 4 und 5 werden ebenfalls in ihre Öffnungsstellung gemäß Fig. 1 zurückgeschwenkt.

## Patentansprüche

1. Vorrichtung zum Verschließen schlauchförmiger Verpackungen wie Wursthüllen o.ä., mit gegeneinander schwenkbar an einem gemeinsamen Träger angelenkten, plattenförmigen Einschnürelementen zum Einschnüren des Verpackungsschlauches und einem von einer Kraftquelle angetriebenen Stempel sowie einer mit diesem zusammenwirkenden Matrize zum Verschließen einer Verschlussklammer um den durch Einschnüren gebildeten Zopf aus dem Verpackungsschlauch, wobei in den Einschnürelementen sowohl eine Führung für den Stempel vorgesehen als auch die Matrize angeordnet ist,
**dadurch gekennzeichnet, dass** die Kraftquelle (17) an einem der Einschnürelemente (5, 5d) befestigt und mit diesem verschwenkbar ist, und dass der Stempel (14) über seinen gesamten Vorschubweg in diesem Einschnürelement (5, 5d) geführt ist.

2. Vorrichtung nach Anspruch 1,
**dadurch gekennzeichnet, dass** drei, jeweils an einem Ende auf einem zur Achse des Verpackungsschlauches konzentrischen Kreis um 120° versetzt gelagerte Einschnürelemente (3, 4, 5) vorgesehen sind, von denen eines (3) aus einer Platte (3a) besteht und die Matrize (11) trägt, eines (4) aus zwei planparallelen Blechen (4a) mit einem die Dicke der Platte (3a, 5a) etwas übersteigenden Abstand und eines (5) teils aus einer Platte (5a), teils aus zwei planparallelen Blechen (5b) besteht, wobei die Teilung (5c) in der Mitte zwischen den beiden Enden dieses Einschnürelements und, im Öffnungszustand, radial zum Lagerkreis verläuft.

3. Vorrichtung nach Anspruch 2,
**dadurch gekennzeichnet, dass** die Matrize (11) in der Platte (3a) des ersten (3) und die Führung (13) des Stempels (14) im Plattenteil (5a) des dritten Einschnürelements (5) angeordnet ist.

4. Vorrichtung nach Anspruch 3,
**dadurch gekennzeichnet, dass** die Wirkflächen der Einschnürelemente (3, 4, 5) in deren Hauptebene stumpfwinklig geknickt oder gekrümmt sind und im Knick- bzw. Krümmungsbereich sowohl die Matrize (11) angeordnet ist als auch die Führung (13) des Stempels (14) mündet.

## Claims

1. Apparatus for closing tubular packagings such as sausage cases or the like comprising plate-shaped constriction elements which are mounted to a common carrier pivotably relative to each other for constriction of the packaging tube, and a punch driven by a power source, as well as a die cooperating with the punch, for closing a closure clip around the braid portion formed by constriction from the packaging tube, wherein both a guide for the punch is provided in the constriction elements and also the die is arranged therein,
**characterised in that** the power source (17) is fixed to one of the constriction elements (5, 5d) and is pivotable therewith and that the punch (14) is guided over its entire advance path in said constriction element (5, 5d).

2. Apparatus according to claim 1 **characterised in that** there are provided three constriction elements (3, 4, 5) which are mounted at a respective end on a circle concentric with the axis of the packaging tube in displaced relationship through 120°, and of which one constriction element (3) comprises a plate (3a) and carries the die (11), one constriction element (4) comprises two plane-parallel metal plates (4a) at a spacing which somewhat exceeds the thickness of the plate (3a, 5a), and one constriction element (5) comprises partly a plate (5a) and partly two plane-parallel metal plates (5b), wherein the division (5c) extends in the centre between the two ends of said constriction element and radially with respect to the mounting circle in the open condition.

3. Apparatus according to claim 2 **characterised in that** the die (11) is arranged in the plate (3a) of the first constriction element (3) and the guide means (13) of the punch (14) is arranged in the plate portion (5a) of the third constriction element (5).

4. Apparatus according to claim 3 **characterised in that** the operative surfaces of the constriction elements (3, 4, 5) are curved or bent at an obtuse angle in their main plane and both the die (11) is arranged in and also the guide (13) of the punch (14) opens in the curve or bend region.

## Revendications

1. Dispositif pour fermer des emballages tubulaires comme des enveloppes de saucisses ou analogues, comportant des éléments de resserrement en forme de plaques pour resserrer la gaine d'emballage, qui sont articulés à pivotement les par rapport aux autres sur un support commun, et un poinçon entraîné par une source de force ainsi qu'une matrice coopérant avec ce poinçon pour fermer une attache de fermeture autour du sommet formé par rétrécissement à partir de la gaine d'emballage, sachant qu'un guide pour le poinçon est prévu dans les éléments de rétrécissement et que la matrice est disposée dans ces éléments,
**caractérisé en ce que** la source (17) de force est fixée sur un (5, 5d) des éléments de rétrécissement et peut pivoter avec cet élément, et **en ce que** le poinçon (14) est guidé dans cet élément (5, 5d) de rétrécissement sur toute sa course d'avancement.

2. Dispositif selon la revendication 1, **caractérisé en ce qu'**il est prévu trois éléments (3, 4, 5) de rétrécissement respectivement montés par une extrémité sur un cercle concentrique à l'axe de la gaine d'emballage en étant décalés de 120°, dont l' un (3) est constitué d'une plaque (3a) et porte la matrice (11), l'autre (4) est constitué de deux tôles (4a) planes et parallèles à une distance mutuelle légèrement supérieure à l'épaisseur de la plaque (3a, 5a), et le troisième (5) est constitué pour partie d'une plaque (5a) et pour partie de deux tôles (5b) planes et parallèles, la séparation (5c) s'étendant au milieu entre les deux extrémités de cet élément de rétrécissement et, dans l'état d'ouverture, radialement au cercle de montage.

3. Dispositif selon la revendication 2, **caractérisé en ce que** la matrice (11) est disposée dans la plaque (3a) du premier élément (3) de rétrécissement, et le guide (13) du poinçon (14) dans la partie (5a) en forme de plaque du troisième élément (5) de rétrécissement.

4. Dispositif selon la revendication 3, **caractérisé en ce que** les surfaces actives des éléments (3, 4, 5) de rétrécissement sont infléchies ou courbées sous un angle obtus dans leur plan principal, et la matrice (11) est disposée dans la région d'inflexion ou de courbure et le guide (13) du poinçon (14) y débouche.
